Europäisches Patentamt

**European Patent Office**

Office européen des brevets

(19)

(11) Veröffentlichungsnummer: **0 028 848**
**B1**

(12) **EUROPÄISCHE PATENTSCHRIFT**

(45) Veröffentlichungstag der Patentschrift:
28.07.82

(51) Int. Cl.³: **C 01 B 17/765**

(21) Anmeldenummer: **80200955.5**

(22) Anmeldetag: **10.10.80**

(54) Verfahren zur Herstellung von konzentrierter Schwefelsäure.

(30) Priorität: **08.11.79 DE 2945021**

(43) Veröffentlichungstag der Anmeldung:
**20.05.81 Patentblatt 81/20**

(45) Bekanntmachung des Hinweises auf die Patenterteilung:
**28.07.82 Patentblatt 82/30**

(84) Benannte Vertragsstaaten:
**AT BE CH DE FR GB IT LI NL SE**

(56) Entgegenhaltungen:
**DE-A-2 354 920**
**DE-A-2 505 828**
**FR-A-2 109 988**
**FR-A-2 316 187**
**FR-A-2 392 931**
**GB-A-1 288 835**
**US-A-2 471 072**

(73) Patentinhaber: **METALLGESELLSCHAFT AG,**
**Reuterweg 14 Postfach 3724, D-6000 Frankfurt/M.1 (DE)**
Patentinhaber: **SÜDCHEMIE AG, Lenbachplatz 6,**
**D-8000 München 2 (DE)**

(72) Erfinder: **Dörr, Karl-Heinz, Dipl.-Ing., Am Gonsenheimer**
**Spiess 6, D-6500 Mainz (DE)**
Erfinder: **Grimm, Hugo, Ing. grad., Sudetenstrasse 37,**
**D-8760 Miltenberg 11 (DE)**
Erfinder: **Sander, Ulrich, Dr. Dipl.-Chem.,**
**Taunusstrasse 116, D-6382 Friedrichsdorf (DE)**
Erfinder: **Peichl, Robert, Dipl.-Chem., Breslauer**
**Strasse 24, D-8420 Kelheim/Donau (DE)**
Erfinder: **Maier, Franz, Dipl.-Ing., Rotkreuzstrasse 12,**
**D-8015 Markt Schwaben (DE)**

(74) Vertreter: **Fischer, Ernst, Dr., Reuterweg 14,**
**D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Herstellung von konzentrierter Schwefelsäure

Die Erfindung betrifft ein Verfahren zur Herstellung von konzentrierter Schwefelsäure durch katalytische Umsetzung von $SO_2$ zu $SO_3$ unter Einsatz von heissen, feuchten $SO_2$-haltigen Gasen mit einem unterstöchiometrischen Verhältnis von $H_2O$ zu $SO_3$, wobei die katalytische Umsetzung des $SO_2$-Gehaltes in zwei Kontaktstufen erfolgt, das Reaktionsgas nach teilweisem Umsatz nach der ersten Kontaktstufe durch indirekten Wärmeaustausch gekühlt wird, das gekühlte Reaktionsgas durch mehrstufiges Einsprühen von konzentrierter Schwefelsäure weiter gekühlt und dabei Schwefelsäuredampf kondensiert und restliches $SO_3$ und Wasserdampf absorbiert werden, und das Gas anschliessend durch indirekten Wärmeaustausch aufgeheizt und in die zweite Kontaktstufe geleitet wird.

Die katalytische Umsetzung von $SO_2$ zu $SO_3$ in Kontaktanlagen erfolgt unter Einsatz von getrockneten Gasen oder in der sog. Nasskatalyse unter Einsatz von feuchten Gasen. Der Einsatz von feuchten Gasen hat den Vorteil, dass die Trocknungskosten eingespart werden können. Jedoch besteht die Gefahr einer Schwefelsäure-Nebelbildung bei der Kondensation des $H_2O/SO_3$-Gehaltes der Gase.

Es ist auch bereits vorgeschlagen worden, die katalytische Umsetzung in zwei Kontaktstufen durchzuführen und die in der ersten Kontaktstufe umgesetzte Menge an $SO_3$ sowie den Wasserdampfgehalt durch eine Zwischenkondensation und Absorption zu entfernen. Das restliche $SO_2$ wird dann in der zweiten Kontaktstufe, die als trockene Katalyse betrieben wird, weitgehend zu $SO_3$ umgesetzt, das in der Endabsorption nach der letzten Kontakthorde absorbiert wird. Dadurch kann die bei der Katalyse mit trockenen Gasen erforderliche Trocknungsstufe eingespart werden. Ein solches Verfahren ist aus der GB-Patentschrift 475 120 bekannt. Die aus der ersten Kontaktstufe austretenden Gase enthalten einen stöchiometrischen Wassergehalt in bezug auf den $SO_3$ Gehalt der Gase zur Kondensation 90 bis 98%iger Schwefelsäure und werden im indirekten Wärmeaustausch langsam auf etwa 200 bis 250°C abgekühlt. Bei einem unterstöchiometrischen Verhältnis von $H_2O$ zu $SO_3$ treten feindisperse Nebel auf, die sehr schwer abzuscheiden sind. Die Nachteile bestehen darin, dass die Einstellung und Einhaltung des stöchiometrischen Wasserdampfgehaltes durch genau dosierte Zugabe von Wasserdampf unter praktischen Betriebsbedingungen nicht möglich ist und damit eine optimale Kondensation nicht möglich ist. Ausserdem liegt der Schwefelsäurepartialdampfdruck in dem Arbeitsbereich der Kondensation so hoch, dass bei der Endabsorption erhebliche Nebelprobleme auftreten.

Aus der US-A-2 471 072 ist es bekannt, die Gase nach der ersten Kontaktstufe durch Eindüsen von maximal 93%iger Schwefelsäure im Gegenstrom von 538 bis 704°C auf unter 166°C abzukühlen, wobei eine Schwefelsäure von 60 bis 93% anfällt. In einer zweiten Stufe werden die Gase durch indirekten Wärmeaustausch auf 24 bis 43°C abgekühlt, wobei eine 4 bis 6%ige Schwefelsäure anfällt. Danach werden die Gase durch ein Koksfilter und einen Trockenturm geleitet und gelangen dann in die zweite Kontaktstufe. Die Nachteile bestehen darin, dass eine schwache Schwefelsäure erzeugt wird und nach der Kondensation eine zusätzliche Trockenstufe erforderlich ist. Aus der DE-B-27 25 432 ist es bekannt, das Gas nach der ersten Kontaktstufe ungekühlt mit Schwefelsäure im Gegenstrom zu bedüsen, wobei eine 96 bis 98%ige Schwefelsäure anfällt. Das Verhältnis von $H_2O$ zu $SO_2$ im eingesetzten Gas beträgt 1,0 bis 1,25, d.h. bei einem Umsatz von über 90% $SO_2$ in der ersten Kontaktstufe ist das Verhältnis von $H_2O$ zu $SO_3$ stöchiometrisch in bezug auf die kondensierte Säure von entsprechend 95 bis 99 Gew.-% $H_2SO_4$. Der Nachteil des stöchiometrischen Verhältnisses von $H_2O$ zu $SO_3$ in bezug auf die Bildung von 95 bis 99%iger Schwefelsäure besteht darin, dass der Taupunkt der Gase sehr hoch liegt, so dass eine Nutzung der fühlbaren hochwertigen Gaswärme z.B. zur Dampferzeugung nicht möglich ist. Die gesamte fühlbare Gaswärme nach der ersen Kontaktstufe muss deshalb zusätzlich zu der Kondensationswärme über die Säurekühlung des Säurekreislaufes des Kondensationsturmes abgeführt werden, und zur Wiederaufheizung der kalten Gase der Kondensation wird die gesamte überschüssige Gaswärme des Kontaktsystems benötigt. Bei einer unterstöchiometrischen Fahrweise würde in dem Kondensationsturm eine sehr starke Nebelbildung auftreten.

Aus der US-A-4 064 223 ist es bekannt, das Gas nach der ersten Kontaktstufe durch indirekten Wärmeaustausch auf eine Temperatur von 180 bis 220°C abzukühlen, dann in einer ersten Stufe im Gleichstrom und in einer zweiten Stufe im Gegenstrom mit kalter 96 bis 99%iger Schwefelsäure zu bedüsen und dabei auf 40 bis 60°C abzukühlen, wobei der Wasserdampf entfernt wird. Anschliessend wird das Gas auf 200°C aufgeheizt und in einem Absorber mit kalter 98 bis 99%iger Schwefelsäure zur $SO_3$-Absorption im Gegenstrom bedüst und dann nach Wiederaufheizung in die zweite Kontaktstufe geleitet. Bei diesem Verfahren erfolgt eine starke Bildung von sehr feinem Nebel in der ersten und zweiten Stufe. Dieser feine Nebel wird auch in der dritten Stufe nicht abgeschieden und kann nur über sehr aufwendige und betriebskosten-intensive Nebelabscheider entfernt werden. Zur Aufheizung der kalten Gase nach der zweiten Stufe ist hochwertige fühlbare Gaswärme des Kontaktsystems erforderlich. Zur tiefen Abkühlung der Gase in der ersten und zweiten Stufe ist eine aufwendige Säurekühlung erforderlich.

Der Erfindung liegt die Aufgabe zugrunde, die Nachteile der bekannten Verfahren zu vermeiden und bei der Verarbeitung von Gasen mit einem unterstöchiometrischen Verhältnis von $H_2O$ zu $SO_3$ nach der ersten Kontaktstufe eine optimale Abscheidung des $H_2O$- und $SO_3$-Gehaltes unter Vermeidung von Nebelbildung in Verbindung mit einer optimalen Nutzung der hochwertigen Gaswärme des Kontaktsystems zu erreichen.

Die Lösung dieser Aufgabe erfolgt erfindungsgemäss dadurch, dass

a) der Wasserdampfgehalt im Reaktionsgas nach Verlassen der ersten Kontaktstufe einem $H_2O/SO_3$-Molverhältnis von weniger als 1 entspricht,

b) das Reaktionsgas nach der ersten Kontaktstufe durch indirekten Wärmeaustausch auf eine Temperatur vorgekühlt wird, bei der die Wandtemperaturen des Wärmeaustauschers oberhalb des Taupunktes des Reaktionsgases liegen,

c) das vorgekühlte Raktionsgas beim Eintritt in die Kondensationsstufe mit Schwefelsäure von 98,0 bis 100% und einer Temperatur von mindestens 95 °C in einem Venturi unter Gleichstromführung in Berührung gebracht wird,

d) die Austrittstemperatur des Gases aus der Kondensationsstufe auf eine Temperatur von mindestens 120 °C eingestellt wird,

e) Das Gas in einer nachgeschalteten Absorptionsstufe durch eine Füllkörperschicht aufwärts geleitet und die Füllkörperschicht mit 98 bis 100%iger Schwefelsäure von einer Temperatur von 70 bis 120 °C berieselt wird,

f) die Austrittstemperatur des trockenen und von $SO_3$ befreiten Gases aus der Absorptionsstufe auf eine Temperatur eingestellt wird, die gleich ist oder knapp über der Auflauftemperatur der Säure in der Absorptionsstufe liegt, und

g) Die Schwefelsäurekonzentration durch Zufuhr von Wasser in die Schwefelsäure der Kondensations- und/oder Absorptionsstufe eingestellt wird.

Bei der Kühlung gemäss (b) genügt es, wenn die Wandtemperaturen des Wärmeaustauschers wenige °C über dem Taupunkt liegen. Da die Temperaturen im Gasstrom immer höher liegen, wird so mit Sicherheit eine Kondensation im Wärmeaustauscher und der Gasleitung zur Kondensationsstufe vermieden. Der Taupunkt des Reaktionsgases ist abhängig von seinem Wasserdampfgehalt. Die Temperatur der gemäss (c) in den Venturi eingedüsten Schwefelsäure wird mit steigenden Wasserdampfgehalten des Reaktionsgases bis zu etwa 140 °C gesteigert. Die maximale Austrittstemperatur des Gases gemäss (d) beträgt etwa 170 °C, um eine genügende Kondensation zu erzielen. Die Austrittstemperatur des Gases gemäss (f) kann bis zu etwa 10 °C über der Auflauftemperatur der Säure liegen. Die Temperaturen werden in Abhängigkeit von dem Wasserdampfgehalt des Reaktionsgases so eingestellt, dass eine gute Kondensation ohne Nebelbildung und mit möglichst geringer Abführung von fühlbarer Gaswärme in das Säuresystem erfolgt.

Der $SO_2$-Gehalt des Kontaktgases liegt zweckmässigerweise zwischen etwa 8 und 13%. Prinzipiel können auch Gase mit geringeren $SO_2$-Gehalten verarbeitet werden, jedoch liegen dann die spezifischen Betriebskosten beträchtlich höher.

Eine vorzugsweise Ausgestaltung besteht darin, dass das aus der ersten Kontaktstufe austretende Reaktionsgas in einem ersten Wärmeaustauscher im Gegenstrom und in einem zweiten Wärmeaustauscher im Gleichstrom durch indirekten Wärmeaustausch mit dem Austrittsgas der Absorptionsstufe vorgekühlt wird, wobei das Austrittsgas zuerst durch den zweiten, dann durch den ersten Wärmeaustauscher und anschliessend in die zweite Kontaktstufe geleitet wird. Dadurch ist eine weitgehende Ausnutzung des aus der ersten Kontaktstufe austretenden Reaktionsgases möglich, so dass das Austrittsgas der Absorptionsstufe ohne zusätzliche Zufuhr von hochwertiger Gaswärme aus dem Kontaktsystem auf die Arbeitstemperatur der zweiten Kontaktstufe aufgeheizt werden kann, wobei gleichzeitig eine genügende Temperaturdifferenz zwischen dem Taupunkt der Gase und der niedrigsten Wandtemperatur der Wärmeaustauscher eingehalten werden kann. Jeder Wärmeaustauscher kann aus mehreren hintereinandergeschalteten Einheiten bestehen.

Eine vorzugsweise Ausgestaltung besteht darin, dass das aus der ersten Kontaktstufe austretende Reaktionsgas in einem Wärmeaustauscher im Gegenstrom durch indirekten Wärmeaustausch mit dem Austrittsgas der Absorptionsstufe vorgekühlt wird, wobei das Austrittsgas der Absorptionsstufe vorher in einem zusätzlichen Wärmeaustauscher im Gegenstrom mittels heisser $SO_3$-haltiger Gase des Kontaktsystems vorgeheizt wird. Diese Ausgestaltung wird insbesondere dann angewendet, wenn häufiger Stillstände der Kontaktanlage aus verfahrenstechnischen Gründen vorzusehen sind, oder eine Auslegung für schwankende Betriebsbedingungen vorzusehen ist. Dadurch kann die Temperaturdifferenz zwischen dem Taupunkt der Gase und der niedrigsten Wandtemperatur der Wärmeaustauscher grösser gehalten werden.

Eine vorzugsweise Ausgestaltung besteht darin, dass die Umsetzung von $SO_2$ zu $SO_3$ in der ersten Kontaktstufe auf 75 bis 88% eingestellt wird. Dadurch wird die Austrittstemperatur der Reaktionsgase aus der ersten Kontaktstufe höher gehalten, so dass in den Wärmeaustauschern zur Abkühlung des feuchten Reaktionsgases die Temperaturdifferenz zwischen dem Taupunkt des Reaktionsgases und der niedrigsten Wandtemperatur grösser gehalten werden kann. Vorzugsweise wird dann mit zwei Kontakthorden in der ersten und zweiten Kontaktstufe gearbeitet.

Die Erfindung wird an Hand der Figuren und eines Ausführungsbeispiels näher erläutert.

Fig. 1 ist ein schematisches Fliessschema einer Kontaktanlage mit 2 Kontakthorden in der ersten und zwei Kontakthorden in der zweiten Kontaktstufe;

Fig. 2 ist ein schematisches Fliessschema einer Kontaktanlage mit drei Kontakthorden in der ersten und einer Kontakthorde in der zweiten Kontaktstufe.

In den Schwefelverbrennungsofen 1 wird über Leitung 2 ungetrocknete, mittels Filter 3 von Feststoffen befreite Luft und/oder Abluft mit schwefelhaltigen Bestandteilen wie z.B. $H_2S$, COS und $CS_2$ und über Leitung 4 flüssiger Schwefel zugeführt und zu $SO_2$ umgesetzt. Im Abhitzekessel 5 werden die feuchten $SO_2$-haltigen Gase gekühlt und über Leitung 6 in die erste Kontakhorde 7 eingeleitet. Das Gas verlässt die erste Kontakthorde 7 über Leitung 8, wird im Dampfüberhitzer 9 abgekühlt und über Leitung 10 in die zweite Kontakthorde 11 geleitet.

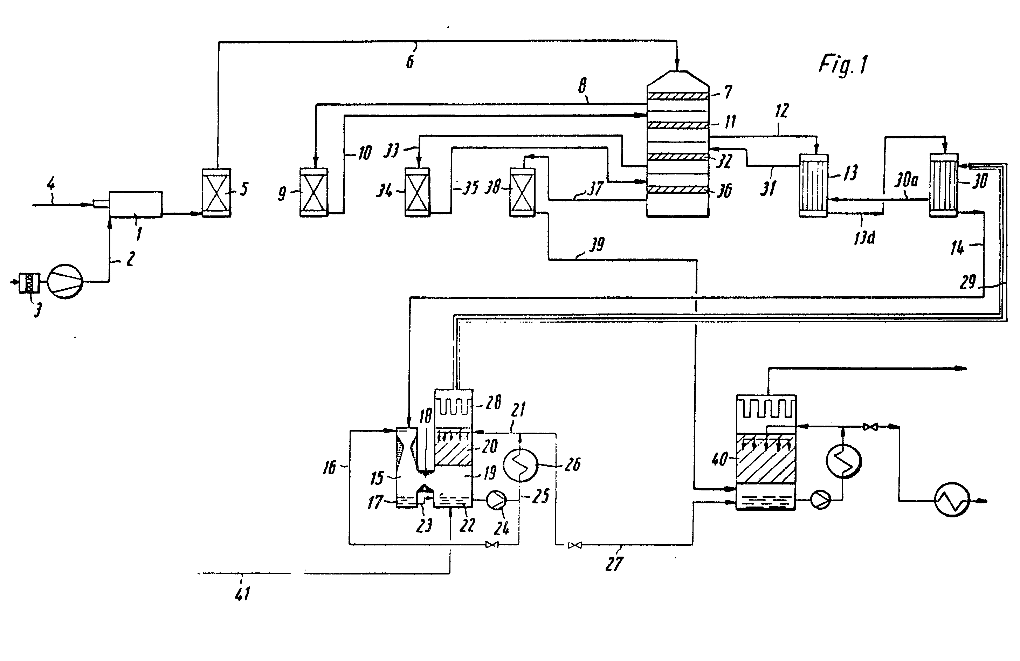

In Fig. 1 verlässt das Gas die zweite Kontakthorde 11 und damit gleichzeitig die erste Kontaktstufe und wird über Leitung 12 in den ersten Zwischenwärmeaustauscher 13 geleitet. Dort wird das feuchte, $SO_3$-haltige Gas im Gegenstrom mit dem Gas aus der Zwischenkondensation/Absorption gekühlt, über Leitung 13a in den zweiten Zwischenwärmeaustauscher 30 geleitet, dort mittels des Austrittsgases aus der Absorption im Gleichstrom weiter gekühlt, und über Leitung 14 in den Venturi 15 der Kondensationsstufe geleitet. Über Leitung 16 wird Schwefelsäure in den Venturi 15 eingedüst. Der grösste Teil des anfallenden Kondensates wird zusammen mit der eingedüsten Säure im Sumpf 17 des Venturi 15 abgeschieden. Das restliche $SO_3$-haltige Gas wird über die Verbindung 18 in die Absorptionsstufe 19 und dort aufwärts durch die Füllkörperschicht 20 geleitet, die von oben über Leitung 21 mit Schwefelsäure berieselt wird. Die dabei gebildete Schwefelsäure wird zusammen mit der Berieselungssäure in den Sumpf 22 abgeschieden. Die Säure aus dem Sumpf 17 wird über Leitung 23 in den Sumpf 22 geleitet und dann zusammen über Pumpe 24 zum Teil in die Leitung 16 und zum Teil über Leitung 25, Säurekühler 26 zum Teil in Leitung 21 und zum Teil über Leitung 27 in den Endabsorber 40 gepumpt. Das von $SO_3$ befreite Gas strömt durch das Gasfilter 28, Leitung 29 in den zweiten Zwischenwärmeaustauscher 30, wird dort mittels des Reaktionsgases vorgeheizt, tritt über Leitung 30a in den ersten Zwischenwärmeaustauscher 13, wird dort im Gegenstrom auf die Arbeitstemperatur der zweiten Kontaktstufe aufgeheizt und tritt über Leitung 31 in die dritte Kontakthorde 32. Die Leitung 29 ist als Doppelmantelleitung ausgebildet. Der innere Mantel ist zur Vermeidung von Kondensation beheizt. Über Leitung 33 wird das Gas aus der dritten Kontakthorde 32 in den Verdampfer 34 geleitet, dort abgekühlt und über Leitung 35 in die vierte Kontakthorde 36 geführt. Aus dieser wird das Gas über Leitung 37 in den Economizer 38 geleitet, dort gekühlt und über Leitung 39 in den Endabsorber 40 geleitet. Über Leitung 41 wird das erforderliche Prozesswasser zur Einstellung der gewünschten Säurekonzentration in den Sumpf 22 zugeführt.

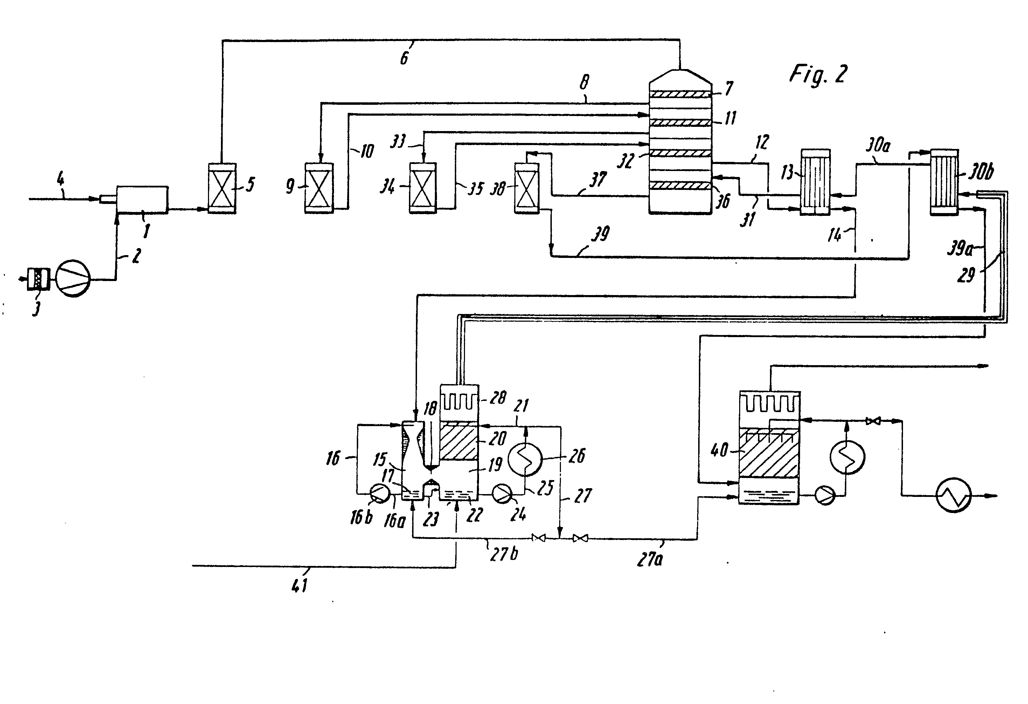

In Fig. 2 verlässt das Gas die zweite Kontakthorde 11 über Leitung 33, wird im Verdampfer/ Economizer 34 abgekühlt und über Leitung 35 in die dritte Kontakthorde 32 geleitet. Das aus der dritten Kontakthorde 32 und damit gleichzeitig der ersten Kontaktstufe austretende Gas wird über Leitung 12 in den Zwischenwärmeaustauscher 13 geleitet. Dort wird das feuchte, $SO_3$-haltige Gas im Gegenstrom mit dem Gas aus der Zwischenkondensation/Absorption gekühlt und über Leitung 14 in den Venturi 15 der Kondensationsstufe geleitet. Über Leitung 16 wird Schwefelsäure in den Venturi 15 eingedüst. Der grösste Teil des anfallenden Kondensates wird zusammen mit der eingedüsten Säure im Sumpf 17 des Venturi 15 abgeschieden. Das restliche $SO_3$-haltige Gas wird über die Verbindung 18 in die Absorptionsstufe 19 und dort aufwärts durch die Füllkörperschicht 20 geleitet, die von oben über Leitung 21 mit Schwefelsäure berieselt wird. Die dabei gebildete Schwefelsäure wird zusammen mit der Berieselungssäure in den Sumpf 22 abgeschieden. Die Säure aus dem Sumpf 17 wird über Leitung 23 in den Sumpf 22 geleitet und dann zusammen über Pumpe 24, Leitung 25, Säurekühler 26 zum Teil in die Leitung 21 und zum Teil in die Leitung 27 gepumpt. Ein Teil der Säure aus der Leitung 27 wird über Leitung 27a in den Endabsorber 40 abgeführt, ein Teil wird über Leitung 27b in den Sumpf 17 geleitet. Über Leitung 16a, Pumpe 16b und Leitung 16 wird ein Kreislauf der in den Venturi 15 eingedüsten Säure aufrechterhalten. Das von $SO_3$ befreite Gas strömt durch das Gasfilter 28, Leitung 29 in den Wärmeaustauscher 30b, wird dort im Gegenstrom mit dem heissen Reaktionsgas aus der vierten Konakthorde vorgewärmt, strömt über Leitung 30a in den Zwischenwärmeaustauscher 13, wird dort im Gegenstrom zu dem heissen Reaktionsgas aus der ersten Kontaktstufe auf die Arbeitstemperatur der vierten Kontakthorde aufgeheizt und tritt über Leitung 31 in die vierte Kontakthorde 36. Aus dieser wird das Gas über Leitung 37 in den Economizer 38 geleitet, dort abgekühlt, über Leitung 39 in den Wärmeaustauscher 30b und über Leitung 39a in den Endabsorber 40 geleitet. Über Leitung 41 wird das erforderliche Prozesswasser zur Einstellung der gewünschten Säurekonzentration in den Sumpf 22 zugeführt.

Ausführungsbeispiele

In Tabelle I ist auf die Arbeitsweise gemäss Fig. 1 Bezug genommen. Die Positionen entsprechen denen der Fig. 1. In Tabelle II beziehen sich die Beispiele auf eine Arbeitsweise der Zwischenkondensation/Absorption wie sie in Fig. 1 dargestellt ist, jedoch erfolgt diese erst nach drei Kontakthorden in der ersten Kotanktstufe und die zweite Kontaktstufe hat nur eine Kontakthorde (vergl. dazu Fig. 2).

Falls es bei einer Arbeitsweise im Kontaktsystem gemäss Fig. 1 erforderlich ist, die Temperaturdifferenz zwischen dem Taupunkt der feuchten SO$_3$-haltigen Gase und der niedrigsten Wandtemperatur in den Zwischenwärmeaustauschern wesentlich zu erhöhen, kann eine Arbeitsweise zur Wiederaufheizung der Gase aus der Absorptionsstufe angewendet werden, wie sie in Fig. 2 dargestellt ist. Dies ist der Fall, wenn die Betriebsbedingungen starken Schwankungen unterliegen bzw. wenn häufige Stillstände erforderlich sind.

In Tabelle III ist auf die Arbeitsweise gemäss Fig. 2 Bezug genommen. Die Positionen entsprechen denen der Fig. 2.

Die Beispiele unterscheiden sich durch verschiedene Wassergehalte der Kontaktgase und der daraus resultierenden SO$_3$-haltigen Gase nach der ersten Kontaktstufe.

Tabelle I

| Pos. | | Beispiel | 1 | 2 | 3 |
|---|---|---|---|---|---|
| 6 | SO$_2$-Gehalt | Vol% SO$_2$ | 10 | 10 | 10 |
| | H$_2$O-Gehalt | gH$_2$O/Nm³tr | 15.6 | 36.9 | 53.8 |
| | Gas-Temperatur | °C | 440 | 440 | 440 |
| 12 | SO$_2$-Umsatz | % | 86 | 86 | 86 |
| | SO$_2$-Gehalt | Vol% SO$_2$ | 1.49 | 1.49 | 1.49 |
| | SO$_3$-Gehalt | Vol% SO$_3$ | 9.2 | 9.2 | 9.2 |
| | H$_2$O-Gehalt | gH$_2$O/Nm³tr | 16.3 | 38.5 | 56.2 |
| | H$_2$O/SO$_3$-Molverh. | | 0.22 | 0.52 | 0.76 |
| | Gastemperatur | °C | 527 | 527 | 527 |
| 13/30 | Min.Wandtemp. | °C | 195 | 218 | 232 |
| 13a | Gastemperatur | °C | 320 | 360 | 390 |
| 14 | Gastemperatur | °C | 257 | 310 | 327 |
| 16 | H$_2$SO$_4$ Konz. | Gew.% H$_2$SO$_4$ | 98.8 | 98.8 | 98.8 |
| | Temperatur | °C | 120 | 127 | 130 |
| 18 | Gastemperatur | °C | 150 | 157 | 160 |
| 21 | H$_2$SO$_4$-Konz. | Gew.% H$_2$SO$_4$ | 98.8 | 98.8 | 98.8 |
| | Temperatur | °C | 75 | 80 | 80 |
| 29 | Gastemperatur | °C | 75 | 80 | 80 |
| 30a | Gastemperatur | °C | 150 | 190 | 227 |
| 31 | Gastemperatur | °C | 440 | 440 | 440 |
| 41 | Prozesswasserzugabe pro t Zwischenabsorbersäure | kg H$_2$O/t H$_2$SO$_4$ | 153 | 98.5 | 54.8 |

Tabelle II

| Pos. | | Beispiel | 4 | 5 | 6 |
|---|---|---|---|---|---|
| 6 | SO$_2$-Gehalt | Vol% SO$_2$ | 10 | 10 | 10 |
| | H$_2$O-Gehalt | gH$_2$O/Nm³tr | 9.6 | 19.6 | 53.8 |
| | Gas-Temperatur | °C | 440 | 440 | 440 |
| 12 | SO$_2$-Umsatz | % | 95 | 95 | 95 |
| | SO$_2$-Gehalt | Vol% SO$_2$ | 0.48 | 0.48 | 0.48 |
| | SO$_2$-Gehalt | Vol% SO$_3$ | 10.1 | 10.1 | 10.1 |
| | H$_2$O-Gehalt | gH$_2$O/Nm³tr | 10 | 20.4 | 56.3 |
| | H$_2$O/SO$_3$-Molverh. | | 0.12 | 0.25 | 0.70 |
| | Gastemperatur | °C | 475 | 475 | 475 |
| 13/30 | Min. Wandtemp. | °C | 180 | 199 | 232 |
| 13a | Gastemperatur | °C | 285 | 310 | 390 |
| 14 | Gastemperatur | °C | 227 | 266 | 353 |
| 16 | H$_2$SO$_4$ Konz. | Gew.% H$_2$SO$_4$ | 98.8 | 98.8 | 98.8 |
| | Temperatur | °C | 114 | 122 | 130 |
| 18 | Gastemperatur | °C | 134 | 152 | 160 |
| 21 | H$_2$SO$_4$-Konz. | Gew.% H$_2$SO$_4$ | 98.8 | 98.8 | 98.8 |
| | Temperatur | °C | 85 | 90 | 90 |
| 29 | Gastemperatur | °C | 85 | 90 | 90 |
| 30a | Gastemperatur | °C | 160 | 160 | 280 |
| 31 | Gastemperatur | °C | 420 | 420 | 420 |
| 41 | Prozesswasserzugabe pro t Zwischenabsorbersäure | kg H$_2$O/t H$_2$SO$_4$ | 171.1 | 147.9 | 68.1 |

Tabelle III

| Pos. | | Beispiel | 7 | 8 | 9 |
|---|---|---|---|---|---|
| 6 | SO$_2$-Gehalt | Vol% SO$_2$ | 10 | 10 | 10 |
| | H$_2$O-Gehalt | gH$_2$O/Nm$_3$tr | 9.6 | 19.6 | 53.8 |
| | Gas-Temperatur | °C | 440 | 440 | 440 |
| 12 | SO$_2$ Umsatz | % | 95 | 95 | 95 |
| | SO$_2$ Gehalt | Vol% | 0.48 | 0.48 | 0.48 |
| | SO$_3$ Gehalt | Vol% | 10.1 | 10.1 | 10.1 |
| | H$_2$O-Gehalt | gH$_2$O/Nm$^3$tr | 10 | 20.4 | 56.3 |
| | H$_2$O/SO$_3$-Molverh. | | 0.12 | 0.25 | 0.70 |
| | Gastemperatur | °C | 475 | 475 | 475 |
| 13 | Min.Wandtemp. | °C | 180 | 199 | 232 |
| 14 | Gastemperatur | °C | 279 | 296 | 328 |
| 16 | H$_2$SO$_4$ Konz. | Gew.% H$_2$SO$_4$ | 98.8 | 98.8 | 98.8 |
| | Temperatur | °C | 114 | 122 | 130 |
| 18 | Gastemperatur | °C | 134 | 152 | 160 |
| 21 | H$_2$SO$_4$-Konz. | Gew.% H$_2$SO$_4$ | 98.8 | 98.8 | 98.8 |
| | Temperatur | °C | 80 | 80 | 80 |
| 29 | Gastemperatur | °C | 80 | 80 | 80 |
| 30a | Gastemperatur | °C | 150 | 150 | 150 |
| 31 | Gastemperatur | °C | 420 | 420 | 420 |
| 41 | Prozesswasserzugabe pro t Zwischenabsorbersäure | kg H$_2$O/t H$_2$SO$_4$ | 171.1 | 147.9 | 68.1 |

Die Vorteile der Erfindung bestehen darin, dass trotz unterstöchiometrischem Verhältnis von H$_2$O zu SO$_3$ des Reaktionsgases nach der ersten Kontaktstufe eine Nebelbildung in der Kondensations- und Absorptionsstufe weitgehendst vermieden wird und entsprechend der Druckverlust in aufwendigen Gasfiltern zur Nebelabscheidung wesentlich reduziert wird. Gegenüber stöchiometrischer oder überstöchiometrischer Betriebsweise wird eine wesentlich höhere Wärmerückgewinnung durch Ausnutzung der hochwertigen fühlbaren Gaswärme des Kontaktsystems erzielt. Dadurch wir die Erzeugung von konzentrierter Schwefelsäure auf Basis Schwefelverbrennung mit ungetrockneter Luft oder mittels Schwefelverbindungen enthaltender Abluft in wirtschaftlicher Weise möglich, insbesondere da die Gastrocknung eingespart wird. Gegenüber einer Arbeitsweise mit vorhergehender Trocknung der Schwefelverbrennungsluft hat die Erfindung den Vorteil, dass trotz vergleichbarer abzuführender Säurewärmemengen, die Kühlung der Säure im Zwischenkondensations-/Absorptionssystem günstiger ist, weil das Temperaturniveau dort höher ist als in der Trocknersäure.

**Patentansprüche**

1. Verfahren zur Herstellung von konzentrierter Schwefelsäure durch katalytische Umsetzung von SO$_2$ zu SO$_3$ unter Einsatz von heissen, feuchten SO$_2$-haltigen Gasen mit einem unterstöchiometrischen Verhältnis von H$_2$O zu SO$_3$, wobei die katalytische Umsetzung des SO$_2$-Gehaltes in zwei Kontaktstufen erfolgt, das Reaktionsgas nach teilweisem Umsatz nach der ersten Kontaktstufe durch indirekten Wärmeaustausch gekühlt wird, das gekühlte Reaktionsgas durch mehrstufiges Einsprühen von konzentrierter Schwefelsäure weiter gekühlt und dabei Schwefelsäuredampf kondensiert und restliches SO$_3$ und Wasserdampf absorbiert werden, und das Gas anschliessend durch indirekten Wärmeaustausch aufgeheizt und in die zweite Kontaktstufe geleitet wird, dadurch gekennzeichnet, dass

a) der Wasserdampfgehalt im Reaktionsgas nach Verlassen der ersten Kontaktstufe einem H$_2$O/SO$_3$-Molverhältnis von weniger als 1 entspricht,

b) das Reaktionsgas nach der ersten Kontaktstufe durch indirekten Wärmeaustausch auf eine Temperatur vorgekühlt wird, bei der die Wandtemperaturen des Wärmeaustauschers oberhalb des Taupunktes des Reaktionsgases liegen,

c) das vorgekühlte Reaktionsgas beim Eintritt in die Kondensationsstufe mit Schwefelsäure von 98,0 bis 100% und einer Temperatur von mindestens 95 °C in einem Venturi unter Gleichstromführung in Berührung gebracht wird,

d) die Austrittstemperatur des Gases aus der Kondensationsstufe auf eine Temperatur von mindestens 120 °C eingestellt wird,

e) das Gas in einer nachgeschalteten Absorptionsstufe durch eine Füllkörperschicht aufwärts geleitet und die Füllkörperschicht mit 98 bis 100%iger Schwefelsäure von einer Temperatur von 70 bis 120 °C berieselt wird,

f) die Austrittstemperatur des trockenen und von SO$_3$ befreiten Gases aus der Absorptionsstufe auf eine Temperatur eingestellt wird, die gleich ist oder knapp über der Auflauftemperatur der Säure in der Absorptionsstufe liegt, und

g) die Schwefelsäurekonzentration durch Zufuhr von Wasser in die Schwefelsäure der Kondensations- und/oder Absorptionsstufe eingestellt wird.

2. Verfahren nach Anspruch 1, dadurch gekennzeichnet, dass das aus der ersten Kontaktstufe austretende Reaktionsgas in einem ersten Wärmeaustauscher im Gegenstrom und in einem zweiten Wärmeaustauscher im Gleichstrom durch indirekten Wärmeaustausch mit dem Austrittsgas der Absorptionsstufe vorgekühlt wird, wobei das Austrittsgas zuerst durch den zweiten, dann durch den ersten Wärmeaustauscher und anschliessend in die zweite Kontaktstufe geleitet wird.

3. Verfahren nach Anspruch 1, dadurch gekennzeichnet, dass das aus der ersten Kontaktstufe austretende Reaktionsgas in einem Wärmeaustauscher im Gegenstrom durch indirekten Wärmeaustausch mit dem Austrittsgas der Absorptionsstufe vorgekühlt wird, wobei das Austrittsgas der Absorptionsstufe vorher in einem zusätzlichen Wärmeaustauscher im Gegenstrom mittels heisser $SO_3$-haltiger Gase des Kontaktsystems vorgeheizt wird.

4. Verfahren nach einem der Ansprüche 1 bis 3, dadurch gekennzeichnet, dass die Umsetzung von $SO_2$ zu $SO_3$ in der ersten Kontaktstufe auf 75 bis 88% eingestellt wird.

## Claims

1. A process of producing concentrated sulfuric acid by a catalytic reaction of $SO_2$ to $SO_3$, wherein $SO_2$-containing, hot, humid gases are used in which the ratio of $H_2O$ to $SO_3$ sub-stoichiometric, and the catalytic reaction of the $SO_2$ content is effected in two contacting stages, the reactant gas is partly reacted in the first contacting stage and is then cooled by an indirect heat exchange, the cooled reactant gas is cooled further in that concentrated sulfuric acid is sprayed into the gas in several steps, whereby sulfuric acid vapor is condensed and residual $SO_3$ and water vapor are absorbed, and the gas is subsequently heated by an indirect heat exchange and ist then fed to the second contacting stage, characterized in that

a) the water vapor content of the reaction gas leaving the first contacting stage corresponds to an $H_2O/SO_3$ mole ratio below 1,

b) the reaction gas from the first contacting stage is precooled by an indirect heat exchange to such a temperature that the wall temperature of the heat exchanger is above the dew point temperature of the reaction gas,

c) the precooled reaction gas which has entered the condensing stage is contacted in a venturi with cocurrent sulfuric acid having a concentration of 98.0 to 100% and a temperature of at least 95 °C,

d) the gas exit temperature of the condensing stage is maintained at or above 120 °C,

e) the gas is caused to rise through a packing layer in a succeeding absorption stage and sulfuric acid having a concentration of 98 to 100% and a temperature of 70 to 120 °C is caused to trickle through the packing layer,

f) the exit temperature of the dry, $SO_3$-free gas from the absorbing stage is maintained at or slightly above the temperature of the acid which is fed onto the packing in the absorption stage, and

g) the concentration of the sulfuric acid is controlled by a supply of water to the sulfuric acid to be supplied to the condensing and/or absorption stage,

2. A process according to claim 1, characterized in that the reaction gas delivered from the first contacting stage is precooled by an indirect heat exchange with the exit gas from the absorption stage in a first countercurrent heat exchanger and in a second cocurrent heat exchanger and the exit gas is passed first through the second and then through the first heat exchanger and thereafter into the second contacting stage.

3. A process according to claim 1, characterized in that the reaction gas delivered from the first contacting stage is pre-cooled in a heat exchanger by an indirect heat exchange with countercurrent exit gas from the absorption stage after the exit gas of the absorption stage has previously been preheated in an additional heat exchanger by means of countercurrent $SO_3$-containing, hot gases of the contacting system.

4. A process according to any of claims 1 to 3, characterized in that the first contacting stage is operated to effect a conversion of 75 to 88% from $SO_2$ to $SO_3$.

## Revendications

1. Procédé de préparation d'acide sulfurique concentré par transformation catalytique de $SO_2$ en $SO_3$ en utilisant des gaz chauds humides contenant du $SO_2$ ayant un rapport de $H_2O$ à $SO_3$ inférieur à la stoechiométrie, en effectuant la transformation catalytique de la teneur en $SO_2$ dans deux étages de contact, en refroidissant le gaz de réaction après transformation partielle en aval du premier étage de contact par échange de chaleur indirecte, en refroidissant davantage le gaz de réaction refroidi par projection dans plusieurs étages d'acide sulfurique concentré et en condensant ainsi de la vapeur d'acide sulfurique et en absorbant le $SO_3$ restant et la vapeur d'eau, le gaz étant ensuite réchauffé par échange de chaleur indirecte et envoyé dans le second étage de contact, caractérisé en ce que:

a) la teneur en vapeur d'eau du gaz de réaction après avoir quitté le premier étage de contact correspond à un rapport molaire $H_2O/SO_3$ inférieur à 1;

b) le gaz de réaction est refroidi après le premier étage de contact par échange de chaleur indirecte jusqu'à une température pour laquelle les températures de paroi de l'échangeur de chaleur sont supérieures au point de rosée du gaz de réaction,

c) le gaz de réaction prérefroidi est mis en contact dans un venturi à l'entrée de l'étage de condensation avec un courant de même sens d'acide sulfurique de 98,0 à 100% $H_2SO_4$ ayant une température d'au moins 95 °C,

d) la température à laquelle le gaz sort de l'étage de condensation est réglée à 120 °C au moins,

e) ensuite le gaz est envoyé, dans un étage d'absorption, ascendant à travers une couche de corps de garnissage et la couche de corps de garnissage est arrosée par de l'acide sulfurique de 98 à 100% $H_2SO_4$ ayant une température de 70 à 120 °C,

f) la température, à laquelle le gaz sec et débarrassé de $SO_3$ sort de l'étage d'absorption, est réglée à une valeur qui est égale ou de peu supérieure à la température d'entrée de l'acide dans l'étage d'absorption, et

g) la concentration d'acide sulfurique est réglée par addition d'eau à l'acide sulfurique de l'étage de condensation et/ou d'absorption.

2. Procédé suivant la revendication 1, caractérisé en ce qu'il consiste à prérefroidir le gaz de réaction sortant du premier étage de contact par échange de chaleur indirecte avec le gaz de sortie à contre-courant dans un premier échangeur de chaleur et en courant de même sens dans un second échangeur de chaleur, le gaz de sortie étant envoyé d'abord dans le second échangeur de chaleur, puis dans le premier, et ensuite dans le second étage de contact.

3. Procédé suivant la revendication 1, caractérisé en ce qu'il consiste à prérefroidir le gaz de réaction sortant du premier étage de contact dans un échangeur de chaleur à contre-courant du gaz de sortie de l'étage d'absorption et avec échange de chaleur indirecte, le gaz de sortie de l'étage d'absorption étant au préalable préchauffé dans un échangeur de chaleur supplémentaire à contre-courant à l'aide de gaz chauds contenant du $SO_3$ du système de contact.

4. Procédé suivant l'une des revendications 1 à 3, caractérisé en ce qu'il consiste à régler la conversion de $SO_2$ en $SO_3$ dans le premier étage de contact entre 75 et 88%.

Fig. 1

Fig. 2